# EUROPEAN PATENT APPLICATION

(11) **EP 2 607 050 A1**
(43) Date of publication of application: **26.06.2013**
(21) Application number: 12196562.8
(22) Date of filing: 11.12.2012
(51) Int. Cl.: B29C 47/86, B29C 47/92, B29C 47/14, B29C 47/06, B29C 47/70

(54) **System and method for rubber component extrusion**

(30) Priority: 19.12.2011 US 201161577266 P; 24.07.2012 US 201213556266
(71) Applicant: The Goodyear Tire & Rubber Company, Akron, OH 44316-0001 (US)
(72) Inventor: Ripple, Warren Paul, Cuyahoga Falls, OH Ohio 44223 (US)
(74) Representative: Kutsch, Bernd

(57) **Abstract**

A system comprising an extruder having an outlet end connected to an extruder head (5) for forming an elastomeric strip (132) to a predetermined cross-sectional profile is disclosed. The extruder head (5) has an internal flow channel (10) having an inlet end and an outlet end, wherein the flow channel (10) has a first temperature zone (42) and a second temperature zone (44) and one or more coolant passages, each coolant passage having an inlet end and an outlet end for circulating a coolant therein. The one or more coolant passages are located adjacent the flow channel (10) and form the first temperature zone (42). Also, a method of correcting or reducing a conicity or a mass distribution imbalance of an elastomeric strip (132) is disclosed. The method comprises extruding an elastomeric strip (132) through an extruder into a flow channel (10) and through a profile die, wherein the flow channel (10) has a first and second temperature zone (42, 44); measuring a conicity, a thickness distribution or a mass distribution of the extruded elastomeric strip (132); and adjusting the temperature of at least one of the first and second temperature zones (42, 44) if the conicity, the thickness distribution or the mass distribution is not within specified tolerances.

## Description

### Technical Field

This invention relates in general to extrusion, and more particularly to the extrusion of elastomeric or rubber components.

### Background of the Invention

It is known in the art of tire manufacturing to form tire components by extrusion. Typically, a strip of elastomeric or rubber material enters an extruder in solid pellet or strip form. The extruder typically has one or more internal screws in a heated barrel which perform work on the elastomer until it has reached a desired consistency. The elastomer exits the extruder and typically enters a flow channel comprised of one or more passages or channels that direct the plasticized material through the extruder head to an outlet or discharge die that forms the material into the proper predetermined cross-sectional profile. For example, if the material is a tread component, it is important that the formed profile of the tread be uniform in size.

It is a common practice in the rubber industry to use a single flow channel to extrude tire treads. Imbalances in the mass and velocity flow may occur, resulting in an uneven tread profile. The use of multiple channels for treads has been more elusive, since it has proven very difficult to make a uniform, precise extrudate required in today's treads. The dividing of the rubber flow into two symmetric channels has the disadvantage of causing a more severe mass and velocity imbalance.

### Summary of the Invention

The invention relates to a system in accordance with claim 1 and to a method in accordance with claim 13.

Dependent claims refer to preferred embodiments of the invention.

In one aspect of the invention, the system comprises an extruder having an outlet end connected to an extruder head for forming an elastomeric strip to a predetermined cross-sectional profile, the extruder head having an internal flow channel having an inlet end and an outlet end, wherein the flow channel has a first temperature zone and a second temperature zone and one or more coolant passages, each coolant passage having an inlet end and an outlet end for circulating a coolant therein, and wherein the one or more coolant passages are located adjacent the flow channel and form the first temperature zone.

In one aspect of the invention, the outlet end of the one or more coolant passages may be in fluid communication with a heating means for heating the coolant.

In one aspect of the invention, the outlet end of the one or more coolant passages may be in fluid communication with a cooling means for cooling the coolant.

In one aspect of the invention, the one or more coolant passages may be connected together.

In one aspect of the invention, the second temperature zone may be defined by one or more coolant passages, each coolant passage having an inlet end and an outlet end for circulating a coolant therein.

In one aspect of the invention, the one or more coolant passages of the second temperature zone may be connected together.

In one aspect of the invention, the first temperature zone and the second temperature zone may be are separated by a longitudinal axis of the flow channel.

In one aspect of the invention, the system may be a system for dual tread strips of elastomer to a predetermined profile, wherein the extruder head is an extruder head for forming at least two elastomeric tread strips to a predetermined cross-sectional profile.

In one aspect of the invention, the extruder head may have internal rubber flow channels, each internal rubber flow channel having an inlet end and an outlet end, wherein at least one or all rubber flow channels have a first temperature zone for controlling or adjusting an outside portion of the flow channels, a second temperature zone for controlling or adjusting a middle of the flow channels, and a third temperature zone for controlling or adjusting an other outside portion of the rubber flow channel.

In one aspect of the invention, the extruder head may comprise a rubber flow splitter residing therein for splitting a rubber flow into two rubber streams.

In one aspect of the invention, the extruder head or the internal flow channel may comprise multiple coolant or water passages therein, each having an inlet end and an outlet ends for circulating a coolant or water therein, wherein the multiple coolant or water passages are located adjacent to create at least three temperature zones.

In one aspect of the invention, the rubber flow channels located above and below an extruder head tongue may be broken up into three temperature controlled zones by the interaction of the flow channels with the extruder head tongue.

In one aspect of the invention, the method of correcting or reducing a conicity or a mass distribution imbalance of an elastomeric strip comprises the steps of extruding an elastomeric strip through an extruder into a flow channel and through a profile die, wherein the flow channel has a first and second temperature zone; measuring a conicity, a thickness distribution or a mass distribution of the extruded elastomeric strip; and adjusting the temperature of at least one of the first and second temperature zones if the conicity, the thickness distribution or the mass distribution is not within specified tolerances.

The method may further comprise repeating the above steps until the conicity, the thickness distribution or the mass distribution is within the specified tolerances.

The elastomeric strip is preferably a tire tread strip.

In yet another aspect of the invention, a system is disclosed comprising an extruder having an outlet end connected to an extruder head for forming an elastomeric strip to a predetermined cross-sectional profile, the extruder head having an internal flow channel having an inlet end and an outlet end, wherein said flow channel has a first temperature zone and a second temperature zone, said extruder flow channel having one or more coolant passages, all having an inlet end and an outlet end for circulating a coolant therein, wherein said one or more coolant passages are located adjacent said flow channel and forming a first temperature zone. The outlet end of the one or more water passages may be in fluid communication with a heating means for heating the coolant. The outlet end of the one or more coolant passages may be in fluid communication with a cooling means for cooling the coolant. The second temperature zone may be further defined by one or more coolant passages connected together and having an inlet end and an outlet end. The first temperature zone and the second temperature zone may be separated by the longitudinal axis of the flow channel.

In yet another aspect of the invention, a system for extruding dual tread strips of elastomer to a predetermined profile is disclosed. The system comprises an extruder having an outlet end connected to an extruder flow head for forming at least two elastomeric tread strips to a predetermined cross-sectional profile, the extruder flow head having internal rubber flow channels, each having an inlet end and an outlet end, wherein said flow channel has a first temperature zone controlling an outside portion of the flow channels and a second temperature zone controlling the middle of the flow channels, wherein resides a rubber flow splitter for splitting the flow into two rubber streams, and lastly the rubber flow channels have a third temperature controlled zone controlling the other outside portion of the rubber flow channel. Said extruder head tongue has multiple water passages having an inlet end and an outlet ends for circulating water therein, wherein said one or more water passages are located adjacent, such that the rubber flow channels located above and below the extruder head tongue are broken up into three temperature controlled zones by the interaction of the flow channels with the extruder head tongue.

In yet another aspect of the invention, a method for adjusting the conicity of an extrudate is disclosed. The method comprises the steps of extruding an elastomeric strip through an extruder into a flow channel and through a profile die, wherein the flow channel has a first and second temperature zone; measuring the conicity of the extruded elastomeric strip; adjusting the temperature of at least one of the first and second temperature zones if the conicity is not within specified tolerances, and then repeating the above steps until the conicity is within the specified tolerances.

### Brief Description of the Drawings

Fig. 1A shows a top plan view of a first embodiment of an extruder flow head connected to an extruder on the upstream side of the material flow and to a profiling die on the downstream side of the channel flow. Fig. 1B shows the two temperature controlled zones in the flow channels, as well as the water flow paths for the temperature controlled water, which in turn controls the temperatures in the two flow channels temperature controlled zones.
Fig. 2 is a cross-sectional view of an elastomeric strip that has an uneven tread profile, where the tread is split into two half tread contours, C1 and C2.
Fig. 3 is a cross sectional view of Fig. 1 along its centerline.
Fig. 4 is a second embodiment of the present invention.
Fig. 5 illustrates a laser vision system;
Fig. 6 illustrates a flow chart describing a first embodiment of a conicity closed loop correction system.

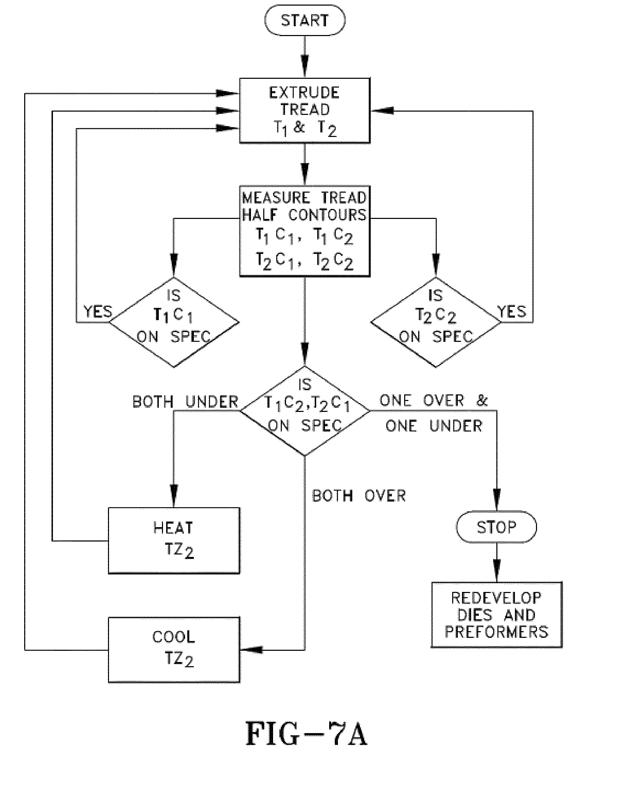

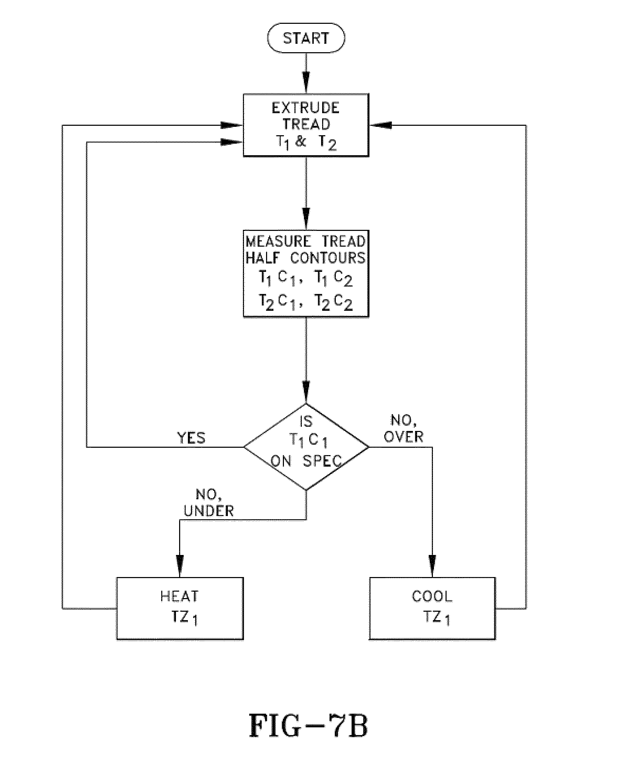

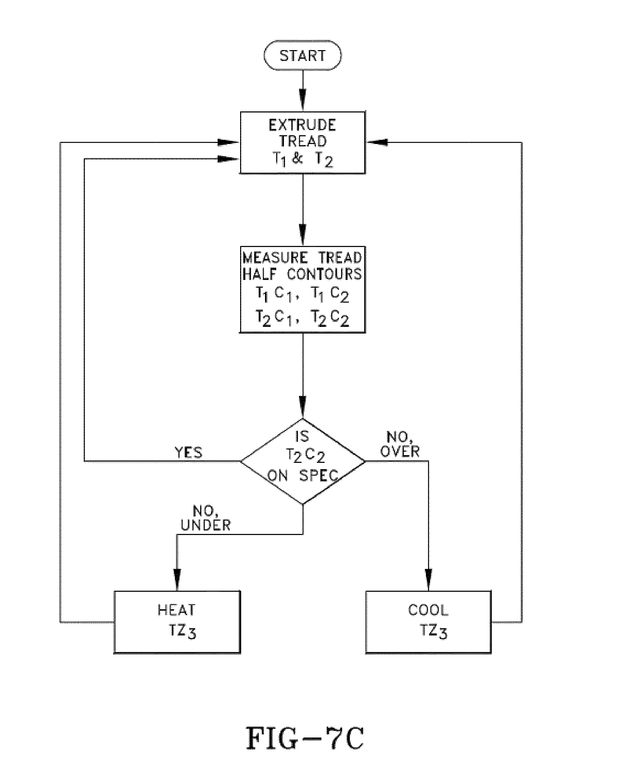

Fig. 7A, 7B, and 7C illustrates a flow chart describing a second embodiment of a conicity closed loop correction system, for a dual cavity tread extruder.
Fig. 8 illustrates a top plan view of a second embodiment of an extruder flow channel connected to an extruder on the upstream side of the material flow and to a profiling die on the downstream side of the channel flow.
Fig. 9 shows an improperly balanced tread profile.
Fig. 10 shows water passages and temperature controls for a dual cavity extruder head tongue.
Fig. 11 is a cross-sectional view of a hexaplex type, multiplex extruder.

### Detailed Description of the Invention

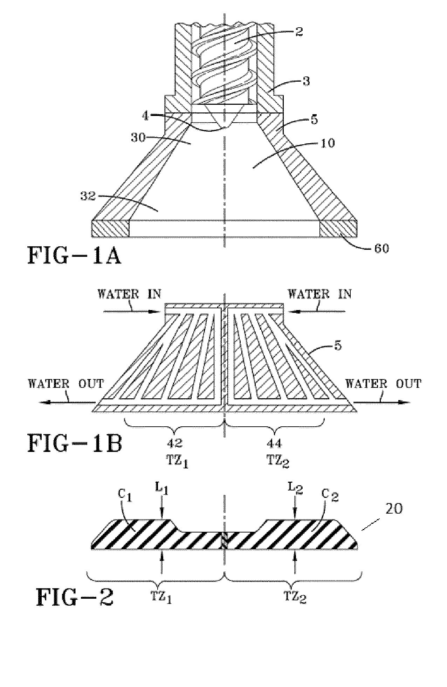

With reference to Figs. 1A, 1B and Fig. 2 an extruder (partially shown) includes an extruder screw 2 having an extruder tip 4 enclosed in an extruder barrel 3. Attached to the extruder barrel is an extruder head 5. The extruder head 5 includes an internal flow channel 10 which has an inlet opening 30 for receiving plasticized material preferably elastomeric material from the extruder outlet. The flow channel 10 has an outlet opening 32 for discharging the plasticized material through a preformer and then a die for forming the profile of the elastomeric strip to be produced. This preformer and die combination is commonly referred to as a profile die 60 while the elastomeric strip is item 20 as illustrated in Fig. 2. The function of the flow channel 10 is to ensure that the elastomeric material is uniform in velocity and mass to ensure a uniform rubber strip exits the die.

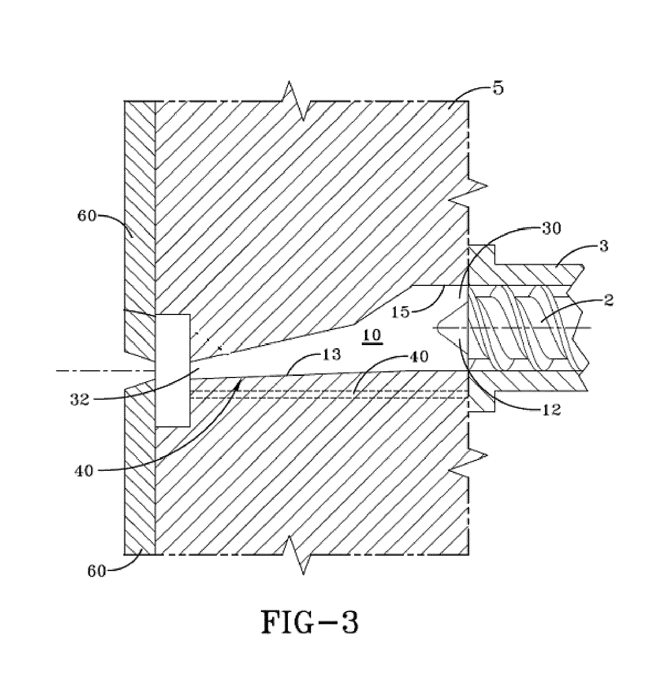

Fig. 3 illustrates a cross-sectional view of the flow channel 10 in the direction 3-3. As shown, the flow channel 10 has a bottom wall 13 and a shaped upper wall 15. As shown in Fig. 1B, the flow channel 10 is divided into at least two temperature controlled zones: Tz1 (42) and Tz2 (44). The longitudinal axis 9 of the channel is preferably the dividing line between the zones. Each temperature controlled zone 42, 44 is independently controllable with respect to temperature.

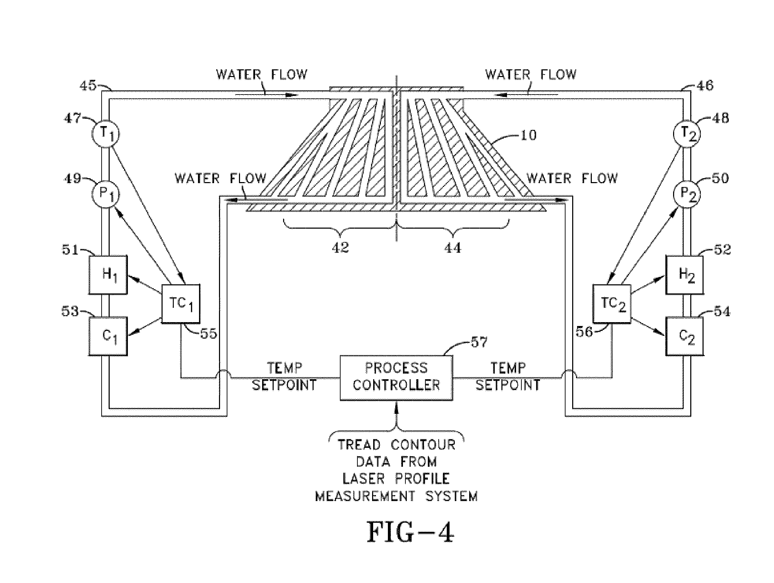

In the example of a single cavity tread extruder flow channel there are two separately controlled temperature zones. Each temperature controlled zone may comprise a coolant circulation system 45, 46 as shown in Fig. 4 formed of one or more circulation passages in the flow channel 10, along with coolant piping to a coolant circulation pump 49, 50, which circulates coolant through a temperature sensor 47, 48, a heating device 51, 52 (electric immersion heater or steam heated heat exchanger) and a cooling device 53, 54 (water to water heat exchanger). Each temperature controlled zone has a temperature controller 55, 56 which controls the starting and stopping of pumps 49, 50 and the heating or cooling of circulation coolant to a temperature set point received from the process controller 57 and with circulation temperature feedback from the temperature sensor 47, 48. Preferably, the coolant is water for ease of use. The invention is not limited to the heating or cooling devices, pumps, etc mentioned above, as other devices known to those skilled in the art may be substituted.

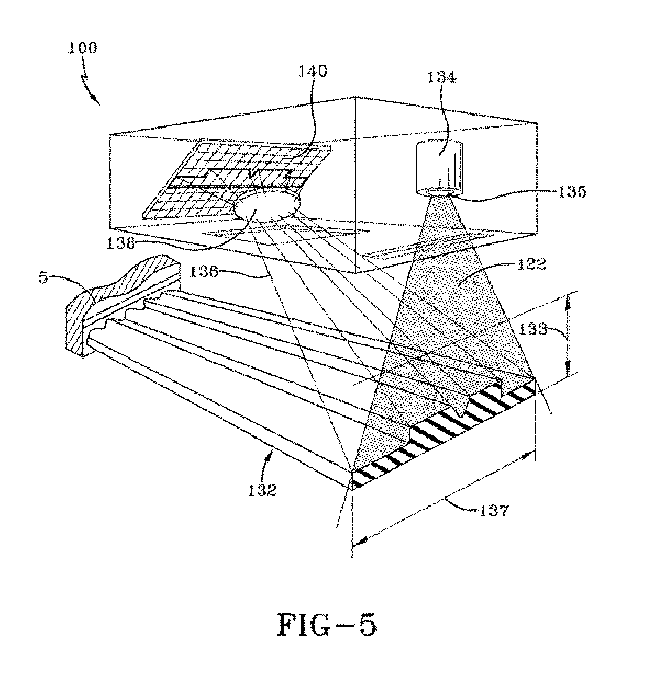

Fig. 5 illustrates a strip of elastomer 132 having an exemplary cross-sectional shape of a tread profile exiting the extruder head 5. Fig. 5 further illustrates a laser scanning system 100 for monitoring the tread profile characteristics. The laser scanning system 100 includes a laser 134 having a light beam that is dispersed by lens 135 into a sheet of light 122. The light sheet 122 has a field depth 133 and a field width 137. Reflected light 136 off of the exemplary tread profile strip 132 is reflected upward through a lens 138 and to a detector 140. The detector 140 functions to interpret in two dimensions the reflected light and generate data indicative of the dimensions and conicity of the target strip, by relating the gauges of the strip measured with respect to the centerline of the tread. From the scanning procedure, the dimensions (i.e., shape) and thickness of the strip is fed into the controller and compared with the specifications within a tolerance range on a continuous basis. If one or more of the dimensions on each side of the strip falls outside the range of acceptable tolerances, then the controller will appropriately adjust the temperature of each zone.

The side to side flow balance of the extruder flow channel, the preformer and the tread die determine the conicity of the uncured tread. For example as shown in Fig. 2, if one half of the tread "Contour C1" is thicker or heavier on one side as compared with the specification, the controller will cool or reduce the temperature of the temperature zone TZ1 42 by cooling the circulation water flowing through the water passages in that half of the flow channel. Reducing the temperature of the temperature zone which produces the heavier/thicker tread profile will result in a slower flow of elastomer, which has the effect of reducing the mass on that half of the tread.

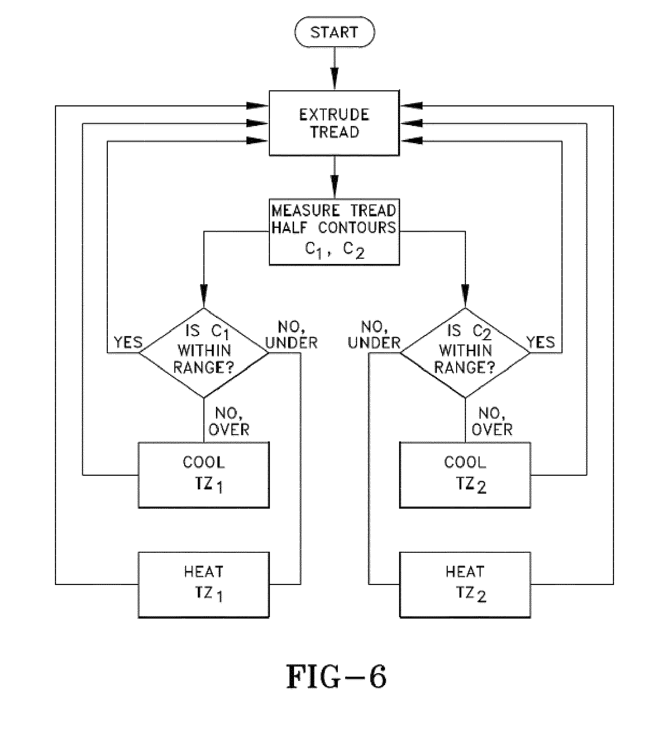

If, on the other hand the thicker half of the tread, was at specified contours and the thinner half of the tread "Contour C2" was off specification, then the controller could heat or increase the temperature of TZ2 44, by heating the circulation water flowing in the water passages on that half of the flow channel. Increasing the temperature of the temperature zone which produces the lighter/thinner tread profile will result in a faster flow of elastomer, which has the effect of increasing the mass on that half of the tread. See Figure 6 for the flowchart of the system logic describing the above.

### Embodiment 2

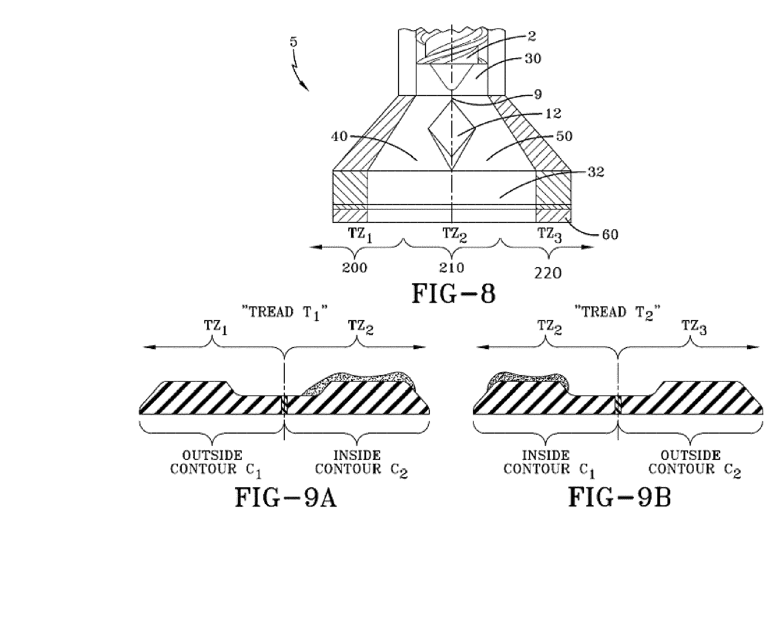

Figure 8 illustrates a second embodiment of an extruder head to be mounted downstream of an extruder. The extruder head is the same as the extruder head of Fig. 1, except for the following differences. Between the inlet end 30 and the outlet end 32 of the flow channel 10, there are first and second flow passages 40, 50 respectively. Interposed between the first and second flow passages 40, 50, is a flow dam 12. The flow dam 12 is a flow splitter. The flow dam 12 separates the first flow passage 40 from the second flow passage 50. The flow dam can be used to extrude two rubber components, such as treads, at the same time.

There is a tendency for the rubber flow to remain higher near the extruder head centerline 9 of the flow channel 10 than further away from the centerline of the channel. This can be adjusted for in the design of the preformer and dies, to be used with a specific tread cap compound. However, in dual cavity tread extrusion, the natural variations in compound viscosity have the effect of creating positive conicity variations (i.e., too much mass) in one tread and negative conicity variations (i.e., too little mass) in the other tread. This is shown in Figure 9 - Treads T1 and T2. In this case, treads were produced with a tread cap compound having a higher viscosity than the compound used to develop the preformers and dies and as a result, the "tread halves" closer to the centerline of the head are heavier in gauge than specification, while the "tread halves" furthest from the centerline are lighter in gauge than the specification. The overall tread weights of the treads meet specification. This is due to the fact that the higher viscosity compound did not flow away from the head centerline, as was the case when the preformers and dies were developed.

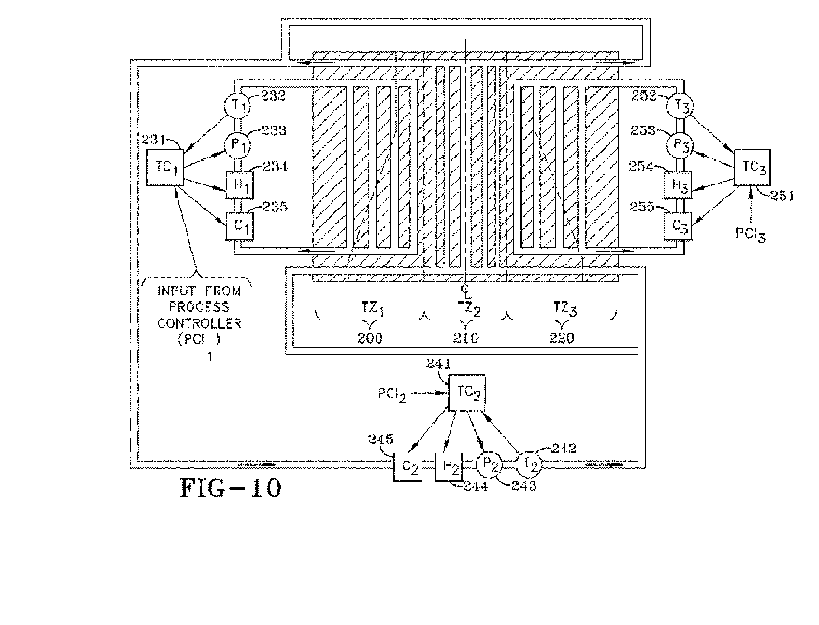

In order to correct this flow imbalance, the flow channel is divided into three temperature zones as shown in Figure 10. The first temperature zone 200 is located on one of the outer portions of the flow channel (Figure 8 - TZ1) and affects the outside portion of tread T1, shown in Figure 9. The second temperature zone 210 (Figure 8 TZ2) is located in the middle of the flow channel and affects the inside portion of Tread T1 (contour C2) and the inside portion of Tread T2 (contour C1), shown on Figure 9. The third temperature zone 220 (Figure 8 TZ3) is located on the other outer portion of the flow channel and affects the outside portion of Tread T2, shown in Figure 9. In order to correct the flow imbalance shown in Figure 9, the middle temperature zone 210 is cooled from its nominal running specified temperature. Temperature zones 200 and 220 may also be increased in temperature (from the nominal specification) to increase the flow to the outside "tread halves", so that the side to side tread masses and resulting conicities are balanced to be back to specification.

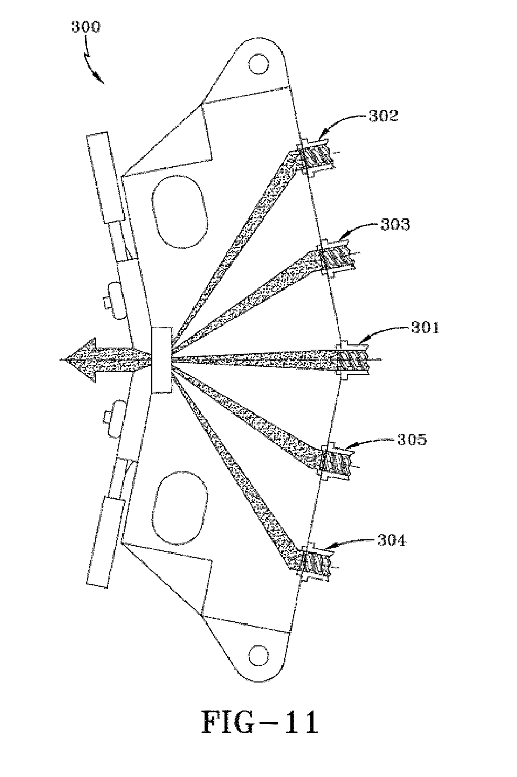

Referring now to Figure 11, a hexaplex extruder head 300 is shown, which has a head "tongue" 301. The head tongue and flow channel 302 guide the rubber flow from extruder #2 303. The head tongue and flow channel 304 guide the rubber flow from extruder #3 305. By drilling water passages in the extruder tongue and controlling the temperature of the water flowing in those water passages, it is possible to affect the flow characteristics of the rubber being extruded by both extruder #2, 303 and extruder #3, 305 simultaneously. As extruders 303 and 305 are the extruder positions typically used to extruder cap compounds, these extruders produce the largest portion of mass in treads.

Refer to Figure 10. Figure 10 shows the coolant passages drilled into an extruder tongue and the controls scheme for controlling the coolant passing through three sets of coolant passages in the head tongue. This extruder tongue is designed for operation with a dual cavity tread extruder. The tongue is broken up into three distinct temperature zones 200, 210, and 220, corresponding to the temperature zones identified on Figure 8. The controls for each temperature zone include a circulation coolant temperature sensor (232, 242, 252), a coolant circulation pump (233, 243, 253) a circulation coolant heating unit (234, 244, 254) and a circulation coolant cooler (235, 245, 255) all interconnected to a temperature controller (231, 241, 251). The temperature controller in each temperature controlled tongue zone maintains a temperature set point received from the process controller by comparing the set point to actual coolant temperatures received from the circulation coolant sensor and controlling the coolant circulation pump and the circulation coolant heating and cooling units.

## Claims

1. A system comprising an extruder having an outlet end connected to an extruder head (5) for forming an elastomeric strip (132) to a predetermined cross-sectional profile, the extruder head (5) having an internal flow channel (10) having an inlet end and an outlet end, wherein the flow channel (10) has a first temperature zone (42) and a second temperature zone (44) and one or more coolant passages, each coolant passage having an inlet end and an outlet end for circulating a coolant therein, and wherein the one or more coolant passages are located adjacent the flow channel (10) and form the first temperature zone (42).

2. The system of claim 1 wherein the outlet end of the one or more coolant passages are in fluid communication with a heating means (51, 52) for heating the coolant.

3. The system of claim 1 or 2 wherein the outlet end of the one or more coolant passages are in fluid communication with a cooling means (53, 54) for cooling the coolant.

4. The system of at least one of the previous claims wherein the one or more coolant passages are connected together.

5. The system of at least one of the previous claims wherein the second temperature zone (44) is defined by one or more coolant passages, each coolant passage having an inlet end and an outlet end for circulating a coolant therein.

6. The system of claim 5 wherein the one or more coolant passages are connected together.

7. The system of claim at least one of the previous claims wherein the first temperature zone (42) and the second temperature zone (44) are separated by a longitudinal axis of the flow channel (10).

8. The system of at least one of the previous claims wherein the system is a system for dual tread strips of elastomer to a predetermined profile, and wherein the extruder head (5) is an extruder head for forming at least two elastomeric tread strips to a predetermined cross-sectional profile.

9. The system of claim 1 or 8 wherein the extruder head (5) has internal rubber flow channels, each internal rubber flow channel having an inlet end and an outlet end, wherein at least one or all rubber flow channels have a first temperature zone for controlling or adjusting an outside portion of the flow channels, a second temperature zone for controlling or adjusting a middle of the flow channels, and a third temperature zone for controlling or adjusting an other outside portion of the rubber flow channel.

10. The system of claim 8 or 9 wherein the extruder head (5) comprises a rubber flow splitter (12) residing therein for splitting a rubber flow into two rubber streams.

11. The system of claim 8, 9 or 10 wherein the extruder head (5) or the internal flow channel (10) comprises multiple coolant or water passages therein, each having an inlet end and an outlet ends for circulating a coolant or water therein, wherein the multiple coolant or water passages are located adjacent to create at least three temperature zones.

12. The system of claim 11 wherein rubber flow channels located above and below an extruder head tongue are broken up into three temperature controlled zones by the interaction of the flow channels with the extruder head tongue.

13. A method of correcting or reducing a conicity or a mass distribution imbalance of an elastomeric strip (132), the method comprising the steps of:
extruding an elastomeric strip (132) through an extruder into a flow channel (10) and through a profile die, wherein the flow channel (10) has a first and second temperature zone (42, 44);
measuring a conicity, a thickness distribution or a mass distribution of the extruded elastomeric strip (132); and
adjusting the temperature of at least one of the first and second temperature zones (42, 44) if the conicity, the thickness distribution or the mass distribution is not within specified tolerances.

14. The method of claim 13, further comprising repeating the above steps until the conicity, the thickness distribution or the mass distribution is within the specified tolerances.

15. The method of claim 13 or 14 wherein the elastomeric strip (132) is a tire tread strip.
